(19) Europäisches Patentamt
European Patent Office
Office européen des brevets

(11) Publication number: **0 186 089 B1**

# (12) EUROPEAN PATENT SPECIFICATION

(45) Date of publication of patent specification: **05.06.91** (51) Int. Cl.5 **C08L 69/00**

(21) Application number: **85116031.7**

(22) Date of filing: **16.12.85**

The file contains technical information submitted after the application was filed and not included in this specification

## (54) Polycarbonate resin composition.

(30) Priority: **14.12.84 JP 264994/84**
**14.12.84 JP 264995/84**

(43) Date of publication of application:
**02.07.86 Bulletin 86/27**

(45) Publication of the grant of the patent:
**05.06.91 Bulletin 91/23**

(84) Designated Contracting States:
**DE FR GB IT**

(56) References cited:
**DE-A- 2 919 629**
**DE-A- 3 333 858**
**FR-A- 2 252 367**

**PATENT ABSRACTS OF JAPAN, vol. 5, no. 4 (C-38)[676], 13th January 1981; & JP-A-55 131 048**

**PATENT ABSTRACTS OF JAPAN, vol. 5, no. 4 (C-38)[676], 13th January 181; & JP-A-55 133 445**

(73) Proprietor: **Kuraray Co., Ltd.**
**1621, Sakazu**
**Kurashiki-shi Okayama-ken(JP)**

Proprietor: **IDEMITSU PETROCHEMICAL CO. LTD.**
**1-1, Marunouchi 3-chome Chiyoda-ku**
**Tokyo 100(JP)**

(72) Inventor: **Igi, Keishiro**
**139-1, Yasue**
**Kurashiki-shi Okayama-ken(JP)**
Inventor: **Okamura, Takayuki**
**342, Minato**
**Okayama-shi Okayama-ken(JP)**
Inventor: **Taniguchi, Shunro**
**10-46, Saiwai-cho**
**Kurashiki-shi Okayama-ken(JP)**
Inventor: **Ishii, Masao**
**1660, Sakazu**
**Kurashiki-shi Okayama-ken(JP)**
Inventor: **Murata, Yoshifumi**
**1660, Sakazu**
**Kurashiki-shi Okayama-ken(JP)**
Inventor: **Yokota, Shinichi**
**1634, Sakazu**
**Kurashiki-shi Okayama-ken(JP)**

**EP 0 186 089 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Matsumoto, Takeshi**
**3-5-10-406, Makuharihongo**
**Chiba-shi Chiba-ken(JP)**
Inventor: **Endo, Hideki**
**3-10-6, Sakuradai**
**Ichihara-shi Chiba-ken(JP)**
Inventor: **Hashimoto, Kazuto**
**2-2-2, Aobadai**
**Ichihara-shi Chiba-ken(JP)**

(74) Representative: **Vossius & Partner**
**Siebertstrasse 4 P.O. Box 86 07 67**
**W-8000 München 86(DE)**

## Description

The present invention relates to a polycarbonate resin composition which has improved moldability and solvent cracking resistance. The present invention also relates to a modifying agent for a polycarbonate resin used in the polycarbonate resin composition of the present invention.

Bisphenol type aromatic polycarbonates (hereinafter sometimes referred to as "polycarbonates") have been known as molding resins with excellent physical and thermal properties. These polycarbonates, however, have a high melt viscosity, and hence, molding temparature and molding pressure are higher than with other resins, which is a disadvantage in molding. Further, molded articles of polycarbonates are not only inferior in hardness, but have the drawback that they easily undergo stress cracking in the presence of certain solvents.

In order to improve these defects of polycarbonates having inferior moldability and solvent cracking resistance without affecting their high impact resistance, transparency and heat resistance, it has been proposed to incorporate various polyesters into the polycarbonate resin. For example, Japanese Patent Publication No. 37633/1979 discloses to incorporate a polyalkylene terephthalate, which is obtained by copolymerization of an ethylene oxide adduct of bisphenol A as a diol component, into the polycarbonate. Japanese Patent Laid Open Publication No. 94538/1978 discloses to incorporate a polyalkylene terephthalate containing cyclohexane dimethanol units as a diol component into the polycarbonate. Japanese Patent Laid Open Publication No. 145751/1980 discloses to incorporate a polyestercarbonate into the composition to improve transparency.

However, the method described in Japanese Patent Publication No. 37633/1979 is economically disadvantageous because it needs an expensive diol such as an ethylene oxide adduct of bisphenol A. The method described in Japanese Patent Laid Open Publication No. 94538/1978 only achieves insufficiently improved solvent cracking resistance because the polyalkylene terephthalate to be incorporated is an amorphous polyester. The method described in Japanese Patent Laid Open Publication No. 145751/1980 can improve the transparency of a composition of a polycarbonate and a polyalkylene terephthalate by addition of said polyestercarbonate copolymer. However, when the polyestercarbonate disclosed in the reference is added into a single system of polycarbonate, it is not only difficult to maintain the transparency of the polycarbonate, but also the solvent cracking resistance is insufficiently improved.

In FR-A-2 252 367 a process for producing thermoplastic polyesters is described wherein linear polyester precondensates having a relative viscosity of at least 1.30 measured at 30°C on a 1% strength solution in equal parts of phenol and tetrachloroethane are allowed to react with 0.01 to 45% by weight, based on the total amount, of a polycarbonate having a degree of polycondensation of at least 10.

Accordingly, it is an object of the present invention to provide a useful polyester type cocondensate as an inexpensive modifying agent for improving moldability and solvent cracking resistance, of polycarbonates without significantly affecting the originally excellent characteristics of the polycarbonate (e.g. high impact resistance, heat resistance, transparency).

It is another object of the present invention to provide a process for producing the polyester type cocondensate which is useful as a modifiying agent for improving moldability and solvent cracking resistance, of the polycarbonate

It is a further object of the present invention to provide an inexpensive polycarbonate resin composition which has improved moldability and solvent cracking resistance without significantly affecting the originally excellent characteristics of the polycarbonate.

These objects are achieved by the surprising finding that a polyester type cocondensate obtained by a specific polymerization method is effective as a modifiying agent for the polycarbonate.

The desired improved polycarbonate resin composition of the present invention comprises

(i) a bisphenol type aromatic polycarbonate, in admixture with

(ii) 5 to 200 parts by weight of a polyester type cocondensate per 100 parts by weight of said bisphenol type aromatic polycarbonate. The polyester type cocondensate is produced by adding

(a) 5 to 100 parts by weight of a bisphenol type aromatic polycarbonate having a viscosity-average molecular weight of not less than 5,000,

to (b) 100 parts by weight of a polyester precursor having a number-average polymerization degree of 1 to 20 which is obtained from a bifunctional carboxylic acid mainly composed of terephthalic acid or derivative thereof having ester forming ability and a diol component, selected from the group consisting of $C_{2-15}$- aliphatic diols, $C_{6-8}$- alicyclic diols, poly(alkyleneoxide)- $\alpha,\omega$-diols, a random or block copolymer of ethylene oxide with 1,2-propylene oxide and a mixture thereof, and effecting polycondensation.

The polyester type cocondensate is useful as a modifying agent for polycarbonate resins. Further, the

present invention also provides a process for producing the polyester type cocondensate which comprises adding

(a) a bisphenol type aromatic polycarbonate having a viscosity-average molecular weight of not less than 5,000,

to (b) a polyester precursor having a number-average polymerization degree of 1 to 20 which is obtained from a bifunctional carboxylic acid mainly composed of terephthalic acid or a derivative thereof having ester forming ability and a diol component from the group consisting of $C_{2-15}$- aliphatic diols, $C_{6-8}$-alicyclic diols, poly(alkyleneoxide)- $\alpha,\omega$-diols, a random or block copolymer of ethylene oxide with 1,2,-propylene oxide and a mixture thereof,, and effecting polycondensation.

The viscosity-average molecular weight M is, herein, obtained from intrinsic viscosity $[\eta]$ measured in dichloromethane at 20 °C according to the Schnell's equation:

$$[\eta] = 1.23 \times 10^{-5} M^{0.83}$$

The bisphenol type aromatic polycarbonate which is used as one component of the composition or as one component of the cocondensate in the present invention is a polymer having units of the following general formula (II):

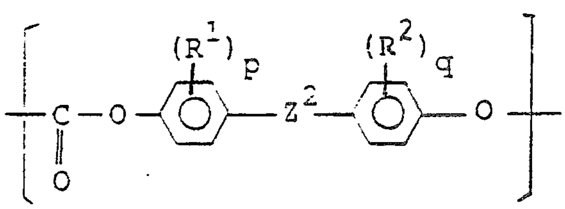

(II)

wherein $Z^2$ is a bond or $C_{1-8}$ alkylene, $C_{2-8}$ alkylidene, $C_{5-15}$ cycloalkylene, $C_{5-15}$ cycloalkylidene, $SO_2$, SO, O CO or

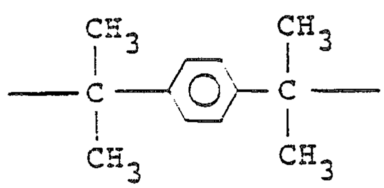

;

$R^1$ and $R^2$ are, a chlorine or bromine atom, respectively or a $C_{1-8}$ saturated alkyl group; and p and q are integers of 0 - 4, respectively.

Suitable examples of units of the general formula (II) are:

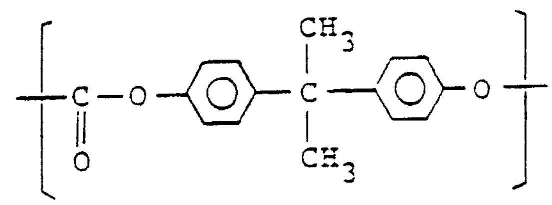 , 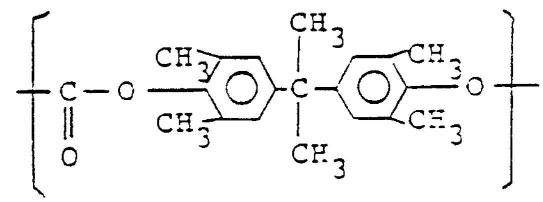

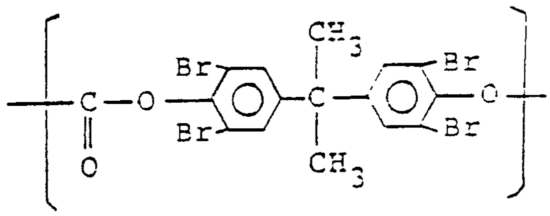 , 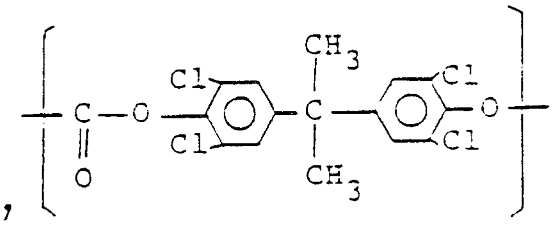

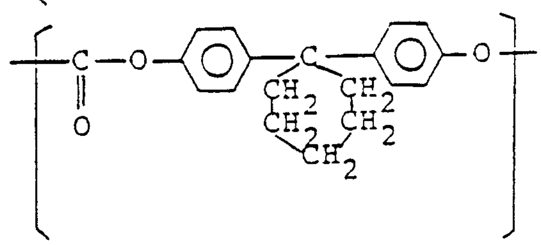 , 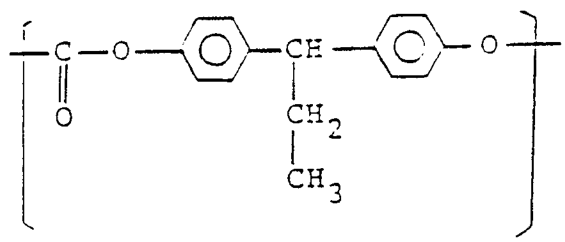

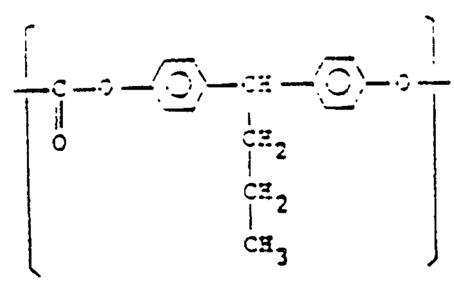

Such bisphenol type aromatic polycarbonates are known and can be easily obtained from an aromatic dihydroxy ccmpound or the derivative thereof as starting material by the conventional phosgene method ester exchange reaction method.

The polyester precursor used in the present invention comprises a bifunctional carboxylic acid mainly composed of terephthalic acid or a derivative thereof having ester forming ability (hereinafter, sometimes expressed as "dicarboxylic acid component") and the diol component, and is a terephthalate type (poly) ester containing units of the following general formula (I):

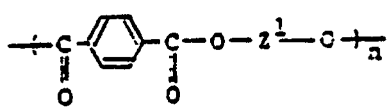 (I)

wherein $Z^1$ is a bifunctional residue which is obtained by removing the hydroxyl groups from a diol, preferably an ethylene and tetramethylene group, and n is 1 to 30. Preferably $Z^1$ is a bifunctional residue obtained by removing the hydroxy groups from an aliphatic diol having 2 to 15 carbon atoms or from an alicyclic diol having 6 to 8 carbon atoms.

When a polyester precursor comprising a dicarboxylic acid component other that terephthalic acid, for example, an aliphatic carboxylic acid is used, the resultant copolymer induces an insufficiently improved solvent cracking resistance of the polycarbonate.

There may be incorporated other dicarboxylic acids together with the terephthalic acid provided that they do not harm the effect of the present invention. Suitable examples of other dicarboxylic acids are

aliphatic dicarboxylic acids such as oxalic acid, malonic acid, adipic acid, suberic acid, azelaic acid, sebacic acid, decane dicarboxylic acid, and the like;
aromatic dicarboxylic acids such as isophthalic acid, and
naphthalene dicarboxylic acid and the derivatives thereof having ester forming ability. These dicarboxylic acid may be used alone or in combination of two or more kinds thereof. These dicarboxylic acids other than terephthalic acid are generally incorporated in an amount of up to 20 molar %, based on the total amount of dicarboxylic acid.

Suitable examples of the diol component are aliphatic diols having 2 to 15 carbon atoms such as ethylene glycol, 1,2 - propane diol, 1,3 - propane diol, 1,4 - butane diol, 2,3 - butane diol, 1,6 - hexane diol, 1,8 - octane diol, neopentyl glycol and 1,10 - decane diol; alicyclic diols having 6 to 8 carbon atoms such as 1,4-cyclohexanedimethanol, poly(alkyleneoxide) - $\alpha,\omega$ - diols such as diethylene glycol, triethylene glycol, polyethylene glycol and poly(tetramethyleneoxide) - $\alpha,\omega$ - diols;and random and block copolymers of ethylene oxide and 1,2 - propylene oxide. These diols may be used alone or in combination of two or more kinds thereof. Particularly, when 1,4 - butanediol or ethylene glycol is used in an amount of not less than 80 molar % based on the total amount of diol a remarkable increase of the solvent cracking resistance of the polycarbonate is achieved.

The above diol component and dicarboxylic acid component can be converted into the polyester precursor by a conventional polycondensation process. This is generally achieved by heating the starting materials in the presence or absence of a catalyst for polycondensation and separating the by-products (water, lower alcohol or the like) from the system.

According to the present invention, it is important that the number - average polymerization degree of the polyester precursor is in the range of 1 to 20. When the number - average polymerization degree of the polyester precursor is within the above range, the resulting cocondensate shows a relatively long block length of the unit. The incorporation of a cocondensate having such a relatively long block length into the polycarbonate can improve the defects of the polycarbonate without harming the original properties thereof. When the number - average polymerization degree of the polyester precursor is less than 1, that is, when the dicarboxylic acid component and the diol component are not substantially reacted, the cocondensation by adding the polycarbonate to the system results in a cocondensate having a relatively short block length. The incorporation of a cocondensate having such a relatively short block length of the unit (i.e. high random property) into polycarbonate does not accomplish the object of the present invention that the solvent cracking resistance of polycarbonate is improved without affecting the excellent original characteristics thereof. If on the other hand, the number - average polymerization degree of the polyester precursor is over 30, the homogeneous dispersion of the polyester precursor in the polycarbonate becomes difficult, and a cocondensate having a relatively long block length can be hardly obtained. Thus, according to the present invention, the polyester precursor has a number - average polymerization degree of 1 to 20.

It is preferred that the polycarbonate used in the cocondensation of the present invention has a viscosity - average molecular weight (sometimes expressed as "molecular weight") of not less than 5,000, more preferably in the range of 8,000 to 100,000. When the molecular weight is within the above range, there may be readily obtained a cocondensate having a relatively long block length. The method wherein the cocondensate is obtained by directly adding phosgene and a bisphenol type compound to the polyester or a precursor thereof, or the method wherein the cocondensate is obtained by cocondensation of an oligocarbonate having a molecular weight of less than 5,000 and a polyester or a precursor thereof can give a relatively short block length of the polycarbonate units in the cocondensate. The incorporation of a cocondensate having such a relatively short block length into the polycarbonate does not accomplish the object of the present invention that the solvent cracking resistance of polycarbonate is improved without affecting the excellent original characteristics thereof.

In the present invention, the block length can be expressed as the melting point depression of the resultant cocondensate. For example, when the ester component constituting the cocondensate has a crystalline structure, it is preferred that the difference of the melting points between the melting point of the polyester alone and the melting point of the cocondensate which refers to the polyester unit in the cocondensate satisfies the following equation:

$$\left(\begin{array}{l}\text{melting point (°K) of poly-}\\ \text{ester alone (not cocondensed}\\ \text{with polycarbonate)}\end{array}\right) - \left(\begin{array}{l}\text{melting point (°K) of the}\\ \text{cocondensate based on the}\\ \text{polyester unit in the}\\ \text{cocondensate}\end{array}\right)$$

$$\leqq 150 \times \frac{\text{molar number of polycarbonate in the copolymer}}{\text{molar number of polyester in the copolymer}}$$

According to the analysis with a differential scanning calorimeter, the cocondensate shows a peak corresponding to the heat absorption of the polyester units and a further peak corresponding to that of the polycarbonate units.

The ratio of the polyester precursor to the polycarbonate is in a range of 5 to 100 parts by weight of polycarbonate per 100 parts by weight of the polyester precursor. When the cocondensation ratio of the polycarbonate is too low, it is difficult to maintain the excellent properties of polycarbonate. On the other hand, when the cocondensation ratio of the polycarbonate is too high, the defects of the polycarbonate are only insufficiently improved. The most preferred ratio of the components for the cocondensation is in the range of 5 to 30 parts by weight of polycarbonate per 100 parts of the polyester precursor.

The cocondensation of the present invention is effected by mixing said specific polyester precursor with the polycarbonate in the desired amount and then subjecting the mixture to a conventional polycondensation reaction to form the polyester type cocondensate. Most conveniently after producing said polyester precursor, the polycarbonate is added to the system and the condensation is continued to give the desired cocondensate.

When the polyester - polycarbonate cocondensate thus obtained is incorporated into a bisphenol type aromatic polycarbonate having the same or different structure from that of the polycarbonate used in the above cocondensation, it can provide a remarkable transparency effect. Further, the mixture may be used for various molding articles which have improved heat resistance and impact resistance.

The polyester type cocondensate obtained above is incorporated in an amount of 5 to 200 parts by weight per 100 parts by weight of the above bisphenol type aromatic polycarbonate. When the polyester type cocondensate is less than 5 parts by weight, it shows an insufficient improvement of the physical properties of the polycarbonate resin composition. On the other hand, if the amount of incorporation is over 200 parts by weight, the resulting resin composition is inferior in the original, properties of the polycarbonate resin (i.e. high impact resistance). The preferred ratio is 10 to 50 parts by weight of the polyester type cocondensate to 100 parts by weight of polycarbonate. Further, particularly as regards transparency, the effect, of the polycarbonate resin composition of the present invention is especially remarkable if the above cocondensate is incorporated into a bisphenol type aromatic polycarbonate having the same structure as that of the polycarbonate used in the cocondensation. The molecular weight of the bisphenol type aromatic polycarbonate is preferably in a range of 5,000 to 100,000.

The method of mixing the polycarbonate with the polyester type cocondensate to obtain the polycarbonate resin composition of the present invention includes various methods which are generally used for the addition of a plasticizer or a filler into a thermoplastic resin. For example, there can be used extruder a Banbury mixer or kneader roll.

The obtained polycarbonate resin composition has the following melt index, tensile impact strength, haze and solvent cracking resistance (critical strain):
melt index (280 °C, g/10 min) is not less than 8 g/10 min;
tensile impact resistance (kg.cm/$cm^2$) is not less than 580 kg.cm/$cm^2$;
haze (%) is not more than 12 %; and
solvent cracking resistance (critical strain; %) is not less than 0.25 %.

If desired, there may be incorporated various fillers into the polyester type cocondensate and the polycarbonate resin composition of the present invention. Suitable examples of fillers are carbon black, titanium oxide, alumina, silica, talc, glass fiber, asbestos, other pigments and dyes.

The molding of the present polycarbonate resin composition can be carried out by a conventional molding method for a thermoplastic resin such as extrusion molding, injection molding, compression molding or calender molding.

Examples

The following examples illustrate the present invention in detail. $\eta_{sp}$ used herein was measured in a mixed solvent (phenol/tetrachloroethane 1:1 by weight) at 0.5 g/dl, at 30 °C.

Preparations 1, 2, 11, 18 and 19

Dimethyl terephthalate (2.5 kg), ethylene glycol, (1.8 kg) and zinc acetate dihydrate (1 g) were heated to 190 °C with stirring to effect an ester exchange reaction. After most of the methanol was distilled off, triphenyl phosphate (1.2 g) and antimony oxide (1.1 g) were added. The mixture was heated to 240 °C, and stirred under reduced pressure with an aspirator for 15 minutes to obtain a polyethylene terephthalate oligomer having a number-average polymerization degree of 10 (a polyester precursor). The polymerization degree was measured according to the end group analysis.

After the system was brought to ambient pressure, a bisphenol A type polycarbonate (produced by Idemitsu Petrochemical Co., Ltd.; Idemitsu Polycarbonate A-3000, viscosity-average molecular weight: 29,000) in a given amount (Preparation 1, 380 g; Preparation 2, 620 g; Preparation 11, without addition; Preparation 18, 80 g; Preparation 19, 3,000 g) was added and the mixture was kneaded, under reduced pressure again with the use of an aspirator. After the pressure reached 50 torr, the temperature of the system was raised to 280 °C over the period of 10 minutes. After 15 minutes, the pressure was brought to 0.2 torr with a vacuum pump and heating was continued with stirring. After 2 hours, the reaction was terminated and the reaction product was isolated and quenched. The products obtained in Preparations 1, 2, 18 and 19 were transparent and could not be fractionated by dissolution in methylene chloride, which is a good solvent for the polycarbonate but a non-solvent for the polyethylene terephthalate, and by dissolution in a mixed solvent of phenol/tetrahydrofuran (1:1 by weight), which provides a good solvent for the polyethylene terephthalate but is a non-solvent for the polycarbonate. Thus, the products obtained in Preparations 1, 2, 18 and 19 were found to be cocondensates in which a polyester component and a polycarbonate component are chemically linked together.

The analysis of this cocondensate with DSC (Differential Scanning Calorimeter) showed a melting point in the range of 252 - 256 °C for each cocondensate, therefore they were confirmed as cocondensate with a blocked polyethylene terephthalate segment. The polyethylene terephthalate homopolymer obtained in Preparation 11 showed a melting point of 260 °C.

Preparation 3

The polycondensation was carried out in the same manner as described in Preparation 1. except that a mixed diol of ethylene glycol (1.26 kg) and 1,4-cyclohexanedimethanol (1.25 kg) (0.7/0.3 by mole) was used instead of ethylene glycol (1.8 kg). The obtained product could not be fractionated by the solvent according to the solvent examination as described in Preparation 1. Therefore, the product was confirmed to be cocondensed.

Preparation 12

The polycarbonate was incorporated at the same time as dimethyl terephthalate and ethylene glycol were added, and the procedure of Preparation 1 was repeated. The obtained product was confirmed to be cocondensed by the same solvent examination as described in Preparation 1, however, the melting point of the polyethylene terephthalate component according to the analysis with DSC was not clearly defined.

Preparation 13

A polyester having a number-average polymerization degree of 100 was obtained according to Preparation 1. The polycondensation reaction was carried out in the same manner as described in Preparation 1 . The obtained product was opaque when melted, and most of the product could be fractionated by the solvent examination. Therefore the product is not chemically cocondensed. Also, the product was partly insoluble in the solvent for viscosity measurement, therefore the viscosity could not be defined.

Preparations 14, 15 and 16

A polymer was obtained in the same manner as described in Preparation 1, except that the given amount of polycarbonate had a viscosity-average molecular weight of 2,600. The melting point corresponding to the polyethylene terephthalate segment of the resulting polymer was 250 °C for that prepared by adding 5 parts by weight of polycarbonate per 100 parts by weight of the polyester precursor (Preparation 14).On the other hand a clear melting point was not found for that prepared by adding of 10 parts by weight (Prepartion 15) and 15 parts by weight (Preparation 16) of polycarbonate, per 100 parts by weight of the polyester precursor.

Preparation 17

A polyester cocondensate was obtained in the same manner as described in Preparation 3, except that no bisphenol type polycarbonate was added.

Preparation 4

Dimethyl terephthalate (2.5 kg), 1,4-butane diol, (2.6 kg) and tetrabutyl titanate (1 g) were heated to 190 °C with stirring to effect an ester exchange reaction. After most of the methanol was distilled off, the mixture was heated to 240 °C, and stirred under reduced pressure with an aspirator for 15 minutes to obtain a polyethylene terephthalate oligomer having a number-average polymerization degree of 10 (a polyester precursor). A defined amount of polycarbonate was added and the polycondensation reaction was carried out in the same manner as described in Preparation 1. The obtained product could not be fractionated by the solvent according to the solvent examination as described in Preparation 1 Therefore, it was confirmed to be cocondensed.

Example

A bisphenol A type polycarbonate (100 parts by weight) (produced by Idemitsu Petrochemical Co. Ltd.: Idemitsu Polycarbonate A-3000; Viscosity-average Molecular Weight, 29, 000) and each of the products obtained in the above described Preparations 1 - 19 in an amount shown in the following table 1, were dried at 120 °C for 12 hours, chip-blended, then fed in to an extruder (a 40 mm-extruder produced by Osaka Seizai Kosaku KK, 8VSE-40-28 type), and kneaded under the following conditions and pelletized:

Cylinder Temperature: 270 - 275 - 275 - 280 °C from the hopper side
Adapter Temperature: 270 °C
Die Temperature: 270 °C

The obtained pellets were dried at 120 °C for 12 hours, then subjected to injection molding by using a NIKKO ANKELBERG V-15-75 type injection molder to give test samples (Composition Nos. 1 - 16)(molding temperature: 120 °C).

The melt index of the pellets (at 280 °C, g/10 min.) was measured as an index for moldability and fluidity of the composition; tensile impact strength as an index for impact resistance (according to ASTMD-1822); and haze of the molded discs (3 mm thick) as an index for transparency. As index of solvent cracking resistance, critical strain was measured according to the 1 4 oval method using toluene isooctane (40/60 by volume) as a solvent (of. Nakatsuji, Shikizai, 39, 455 (1966)).

The results are shown in Table 1.

Table 1

| Composition No. | Polyester Type Cocondensate: Prep. No. | $\eta_{sp}$ dl/g | Glycol Composition (mol%) (a) | PC Composition (parts by weight) (b) | Amount (parts by weight per 100 parts of Polycarbonate) | Melt Index (280°C) g/10 min | Tensile Impact Strength kg cm/cm² | Haze % | Solvent Resistance (Critical Strain) (%) |
|---|---|---|---|---|---|---|---|---|---|
| 1 (Ref.) | - | - | - | - | 0 | 4.3 | 900 | 3 | 0.22 |
| 2 | 1 | 0.7 | EG[e] (100) | 15 | 20 | 8.8 | 780 | 5 | 0.26 |
| 3 | 1 | 0.7 | EG (100) | 15 | 40 | 10.0 | 630 | 9 | 0.32 |
| 4 | 2 | 0.7 | EG (100) | 25 | 20 | 8.2 | 800 | 5 | 0.26 |
| 5 | 2 | 0.7 | EG (100) | 25 | 40 | 9.8 | 680 | 6 | 0.30 |
| 6 (Ref.) | 11 | 0.8 | EG (100) | 0 | 20 [c] | 9.6 | 730 | 25 | 0.26 |
| 7 (Ref.) | 12 | 0.7 | EG (100) | 15 | 20 | 8.9 | 770 | 6 | 0.23 |
| 8 (Ref.) | 13 | - | EG (100) | 15 | 20 | 8.5 | 740 | 15 | 0.27 |
| 9 (Ref.) | 14 | 0.4 | EG (100) | 5 | 20 | > 20 | < 500 | 17 | 0.23 |
| 10 (Ref.) | 15 | 0.4 | EG (100) | 10 | 20 | > 20 | < 500 | 7 | 0.22 |
| 11 (Ref.) | 16 | 0.4 | EG (100) | 15 | 20 | > 20 | < 500 | 6 | 0.23 |
| 12 (Ref.) | 18 | 0.7 | EG (100) | 3 | 20 | 8.8 | 760 | 22 | 0.27 |
| 13 (Ref.) | 19 | - | EG (100) | 120 | 20 | 5.4 | 840 | 4 | 0.22 |
| 14 | 3 | 0.8 | EG (30) - CH[f] (70) | 15 | 20 | 12.7 | 790 | 3 | 0.25 |
| 15 | 3 | 0.8 | EG (30) - CH (70) | 15 | 40 | 16.8 | 690 | 8 | 0.30 |
| 16 (Ref.) | 17 | 0.9 | EG (30) - CH (70) | 0 | 20 [d] | 13.5 | 710 | 20 | 0.25 |
| 17 | 4 | 0.9 | BG[g] (100) | 15 | 20 | 9.0 | 800 | 5 | 0.27 |
| 18 | 4 | 0.9 | BG (100) | 15 | 100 | 18.0 | 580 | 9 | 0.42 |

(a) Kind and composition (mol%) of the glycol component constituting the polyester precursor.
(b) Parts by weight of polycarbonate per 100 parts by weight of polyester precursor in the cocondensate.
(c) Polyethylene terephthalate homopolymer
(d) Polyethylene-1,4-cyclohexane dimethylene terephthalate
(e) EG: ethylene glycol
(f) CH: cyclohexane dimethanol
(g) BG: 1,4-butanediol

As is clear from Table 1, the polycarbonate resin composition prepared by incorporation of the cocondensate of the present invention was found to improve fluidity and solvent cracking resistance of the polycarbonate without remarkably decreasing its original impact resistance and transparency.

On the other hand, the compositions Nos. 6 and 16 which employed, as a modifiying agent for the polycarbonate, a polyester which was not copolymerized with the polycarbonate have improved fluidity and

solvent cracking resistance, but remarkably decreased transparency.

The composition No. 7, using a cocondensate which was obtained by adding the polycarbonate during the polycondensation of dimethyl terephthalate and ethylene glycol retained its original transparency, but showed insufficient improvement in solvent cracking resistance. On the other hand, the composition No. 8, in which the product obtained by the reaction of polyethylene terephthalate having a number-average polymerization degree of 100 with the polycarbonate was employed, has remarkably decreased transparency with haze above 10.

Moreover, similar to the composition No. 7, the compositions Nos. 9, 10 and 11 in which the cocondensate obtained from a polycarbonate having a molecular weight of less than 5,000 was employed, retained transparency, but do not show an improvement in solvent cracking resistance.

## Claims

1. A polyester type cocondensate which is produced by adding
   (a) 5 to 100 parts by weight of a bisphenol type aromatic polycarbonate having a viscosity-average molecular weight of not less than 5,000,
   to (b) 100 parts by weight of a polyester precursor having a number-average polymerization degree of 1 to 20 which is obtained from a bifunctional carboxylic acid mainly composed of terephthalic acid or a derivative thereof having ester forming ability and a diol component selected from the group consisting of $C_{2-15}$- aliphatic diols, $C_{6-8}$- alicyclic diols, poly(alkyleneoxide)- $\alpha,\omega$-diols, a random or block copolymer of ethylene oxide with 1,2-propylene oxide and a mixture thereof, and effecting polycondensation.

2. A polyester type cocondensate according to claim 1, wherein the polycarbonate is cocondensed with the polyester precursor in an amount of 5 to 30 parts by weight, per 100 parts by weight of the polyester precursor.

3. A polyester type cocondensate according to claim 1, wherein the bifunctional carboxylic acid component is composed of terephthalic acid and one or more aliphatic or aromatic dicarboxylic acids other than terephthalic acid in an amount of not more than 20 molar % based on the total amount of dicarboxylic acid.

4. A polyester type cocondensate according to claim 1, wherein the polyester precursor has a unit of the following general formula (I):

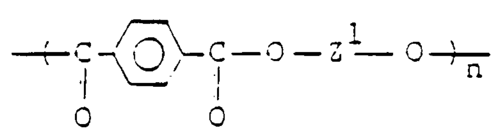

(I)

wherein $Z^1$ is a bifunctional alkylene or poly(alkylene oxide) residue or a residue of a random or block copolymer of ethylene oxide with 1,2-propylene oxide, and n is 1 to 30.

5. A polyester type cocondensate according to claim 4, wherein $Z^1$ is a bifunctional residue obtained by removing the hydroxy groups from an aliphatic diol having 2 to 15 carbon atoms or from an alicyclic diol having 6 to 8 carbon atoms.

6. A polyester type cocondensate according to claim 5, wherein $Z^1$ is the bifunctional residue which is obtained by removing the hydroxy groups from ethylene glycol.

7. A polyester type cocondensate according to claim 5, wherein $Z^1$ is the bifunctional residue which is obtained by removing the hydroxy groups from 1,4-butanediol.

8. A polyester type cocondensate according to claim 1, wherein the polycarbonate for cocondensation with the polyester precursor has a viscosity-average molecular weight of 8,000 to 100,000.

9. A polyester type cocondensate according to claim 1, wherein the polycarbonate has a unit of the

structure of the following general formula:

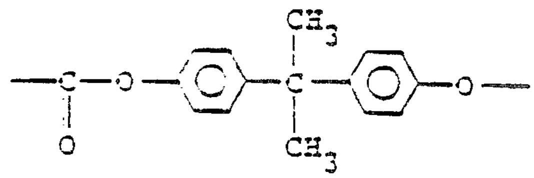

**10.** A polyester type cocondensate according to claim 1, wherein the difference of the melting points between the melting point of the polyester alone and the melting point of the cocondensate which refers to the polyester unit in the cocondensate satisfies the following equation:

$$\left(\begin{array}{l}\text{melting point (°K) of poly-}\\\text{ester alone (not cocondensed}\\\text{with polycarbonate)}\end{array}\right) - \left(\begin{array}{l}\text{melting point (°K) of the}\\\text{cocondensate based on the}\\\text{polyester unit in the}\\\text{cocondensate}\end{array}\right)$$

$$\leqq 150 \times \frac{\text{molar number of polycarbonate in the copolymer}}{\text{molar number of polyester in the copolymer}}$$

**11.** A process for producing the polyester type cocondensate of claim 1 which comprises adding

(a) a bisphenol type aromatic polycarbonate having a viscosity-average molecular weight of not less than 5,000,

to (b) a polyester precursor having a number-average polymerization degree of 1 to 20 which is obtained from terephthalic acid or a derivative thereof having ester forming ability and a diol component selected from the group consisting of $C_{2-15}$- aliphatic diols, $C_{6-8}$ alicyclic diols, poly-(alkyleneoxide)- $\alpha,\omega$ -diols, a random or block copolymer of ethylene oxide with 1,2-propylene oxide and a mixture thereof, and effecting polycondensation."

**12.** A polycarbonate resin composition which comprises

(i) a bisphenol type aromatic polycarbonate, in admixture with

(ii) 5 to 200 parts by weight of a polyester type cocondensate according to any one of claims 1 to 10 per 100 parts by weight of said bisphenol type aromatic polycarbonate.

**13.** A composition according to claim 12, wherein the polyester type cocondensate is incorporated into the polycarbonate in an amount of 10 to 50 parts by weight, per 100 parts by weight of polycarbonate.

**14.** A polycarbonate resin composition having the following melt index, tensile impact strength, haze and solvent cracking resistance (critical strain):

melt index (280° C, g/10 min) is not less than 8 g/10 min;

tensile impact resistance ($kg.cm/cm^2$) is not less than 580 $kg.cm/cm^2$;

haze (%) is not more than 12%; and

solvent cracking resistance (critical strain; %) is not less than 0.25%.

**Revendications**

**1.** Un cocondensat du type polyester qui est produit par addition de

(a) 5 à 100 parties en poids d'un polycarbonate aromatique du type bisphénol ayant un poids moléculaire moyen en viscosité non inférieur à 5 000,

à (b) 100 parties en poids d'un précurseur de polyester ayant un degré de polymérisation moyen en

nombre de 1 à 20 qui est obtenu à partir d'un acide carboxylique bifonctionnel composé principalement d'acide téréphtalique ou d'un dérivé de ce dernier capable de former un ester et d'un composant diol, choisi dans le groupe comprenant les diols $C_{2-15}$-aliphatiques, les diols $C_{6-8}$-alicycliques, les poly(oxyalkylène)-α,ω-diols, un copolymère au hasard ou séquencé d'oxyde d'éthylène avec l'oxyde de 1,2-propylène et un mélange de ceux-ci, et à effectuer la polycondensation.

2. Un cocondensat du type polyester selon la revendication 1, selon lequel le polycarbonate est cocondensé avec le précurseur de polyester en quantité de 5 à 30 parties en poids pour 100 parties en poids du précurseur de polyester.

3. Un cocondensat du type polyester selon la revendication 1, selon lequel le composant acide carboxylique bifonctionnel est composé d'acide téréphtalique et d'un ou plusieurs acides dicarboxyliques aliphatiques ou aromatiques autres que l'acide téréphtalique en quantité ne dépassant pas 20 % molaire basée sur la quantité totale d'acide dicarboxylique.

4. Un cocondensat du type polyester selon la revendication 1, selon lequel le précurseur de polyester a une unité de formule générale suivante (I) :

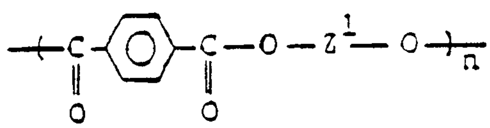

(I)

dans laquelle $Z^1$ est un résidu alkylène bifonctionnel ou un résidu poly(oxyalkylène) ou un résidu d'un copolymère au hasard ou séquencé d'oxyde d'éthylène avec l'oxyde de 1,2-propylène et n est égal à 1 a 30.

5. Un cocondensat du type polyester selon la revendication 4, selon lequel $Z^1$ est un résidu bifonctionnel obtenu par élimination des groupes hydroxyles à partir d'un diol aliphatique ayant 2 à 15 atomes de carbone ou à partir d'un diol alicyclique ayant 6 à 8 atomes de carbone.

6. Un cocondensat du type polyester selon la revendication 5, selon lequel $Z^1$ est le résidu bifonctionnel qui est obtenu par élimination des groupes hydroxyles de l'éthylèneglycol.

7. Un cocondensat du type polyester selon la revendication 5, selon lequel $Z^1$ est un résidu bifonctionnel qui est obtenu par élimination des groupes hydroxyles à partir du 1,4-butanediol.

8. Un cocondensat du type polyester selon la revendication 1, selon lequel le polycarbonate pour la cocondensation avec le précurseur de polyester a un poids moléculaire moyen en viscosité de 8 000 à 100 000.

9. Un cocondensat du type polyester selon la revendication 1, selon lequel le polycarbonate a une unité ayant la structure représentée par la formule générale suivante :

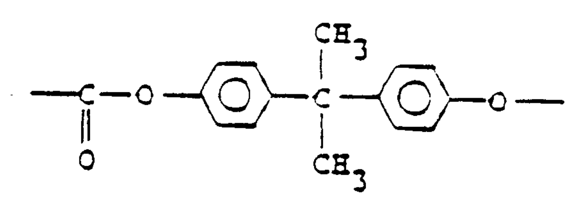

10. Un cocondensat du type polyester conformément à la revendication 1, selon lequel la différence des points de fusion entre le point de fusion du polyester seul et le point de fusion du cocondensat qui se réfère à l'unité polyester dans le cocondensat satisfait à l'équation suivante :

$$\left(\begin{array}{c}\text{Point de fusion (}^{\circ}\text{K) du poly}\\ \text{ester seul (non cocondensé avec}\\ \text{le polycarbonate)}\end{array}\right) - \left(\begin{array}{c}\text{Point de fusion (}^{\circ}\text{K) du}\\ \text{cocondensat basé sur}\\ \text{l'unité de polyester dans}\\ \text{le cocondensat}\end{array}\right)$$

$$\leqq 150 \times \frac{\text{nombre molaire de polycarbonate dans le copolymère}}{\text{nombre molaire de polyester dans le copolymère}}$$

**11.** Un procédé de production d'un cocondensat du type polyester selon la revendication 1, qui comprend l'addition de

(a) un polycarbonate aromatique du type bisphénol ayant un poids moléculaire moyen en viscosité non inférieur à 5 000,

à (b) un précurseur de polyester ayant un degré de polymérisation moyen en nombre de 1 à 20 qui est obtenu à partir de l'acide téréphtalique ou d'un dérivé de celui-ci capable de former un ester et d'un composant diol choisi dans le groupe comprenant les diols $C_{2-15}$-aliphatiques, les diols $C_{6-8}$-alicycliques, les poly(oxyalkylène)-$\alpha$,$\omega$-diols, un copolymère au hasard ou séquencé d'oxyde d'éthylène avec l'oxyde de 1,2-propylène et un mélange de ceux-ci, et à effectuer la polycondensation.

**12.** Une composition de résine de polycarbonate qui comprend :

(i) un polycarbonate aromatique du type bisphénol en mélange avec

(ii) 5 à 200 parties en poids d'un cocondensat du type polyester conformément à l'une quelconque des revendications 1 à 10, pour 100 parties en poids dudit polycarbonate aromatique du type bisphénol.

**13.** Une composition selon la revendication 12 selon laquelle le cocondensat du type polyester est incorporé dans le polycarbonate en quantité de 10 à 50 parties en poids pour 100 parties en poids de polycarbonate.

**14.** Une composition de résine de polycarbonate ayant les caractéristiques suivantes d'indice de fusion, de résistance aux chocs à la rupture, de formation de voile et de résistance à la fissuration par les solvants (déformation critique) :

indice de fusion (280°C, g/10 min) non inférieur à 8 g/10 min ;

résistance aux chocs à la rupture (kg.cm/cm$^2$) non inférieur à 580 kg.cm/cm$^2$ ;

formation d'un voile (%) non supérieure à 12 % ; et

résistance à la fissuration par les solvants (déformation critique : %) non inférieure à 0,25 %.

## Ansprüche

**1.** Cokondensat des Polyestertyps, hergestellt durch Zugabe von

(a) 5 bis 100 Gew.-Teilen eines aromatischen Polycarbonats des Bisphenoltyps mit einem Viskositätsmittel-Molekulargewicht von mindestens 5000 zu

(b) 100 Gewichtsteilen einer Polyestervorstufe mit einem Zahlenmittel-Polymerisationsgrad von 1 bis 20, die erhalten wird aus einer bifunktionellen Carbonsäure, welche hauptsächlich zusammengesetzt ist aus Terephthalsäure oder einem Derivat davon mit Ester bildenden Eigenschaften und einer Diolkomponente, die ausgewählt wird aus der Gruppe, die $C_{2-15}$-aliphatischen Diolen, $C_{6-8}$-alicyclischen Diolen Poly(alkylenoxid)-$\alpha$,$\omega$-diolen, einem statistischen- oder Blockcopolymer aus Ethylenoxid mit 1,2-Propylenoxid und einem Gemisch davon besteht,

und die Durchführung einer Polykondensation.

**2.** Cokondensat des Polyestertyps nach Anspruch 1, bei dem das Polycarbonat mit der Polyestervorstufe in einer Menge von 5 bis 30 Gew.-% auf 100 Gewichtsteile der Polyestervorstufe cokondensiert ist.

3. Cokondensat des Polyestertyps nach Anspruch 1, bei dem die bifunktionelle Carbonsäurekomponente aus Terephthalsäure und einer oder mehreren aliphatischen oder aromatischen Dicarbonsäuren, die keine Terephthalsäure sind, in einer Menge von höchstens 20 Mol-% bezogen auf die Gesamtmenge der Dicarbonsäure, zusammengesetzt ist.

4. Cokondensat des Polyestertyps nach Anspruch 1, bei dem die Polyestervorstufe eine Einheit der nachstehenden allgemeinen Formel (I) aufweist

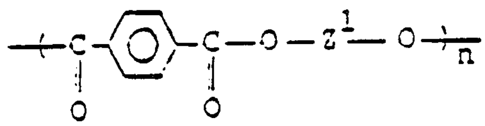

(I)

in der $Z^1$ einen bifunktionellen Alkylen- oder Poly(alkylenoxid)-Rest oder einen Rest eines statistischen oder Blockcopolymers von Ethylenoxid mit 1,2-Propylenoxid darstellt, und n den Wert 1 bis 30 hat.

5. Cokondensat des Polyestertyps nach Anspruch 4, bei dem $Z^1$ einen bifunktionellen Rest darstellt, der durch Entfernen der Hydroxygruppen aus einem aliphatischen Diol mit 2 bis 15 Kohlenstoffatomen oder aus einem alicyclischen Diol mit 6 bis 8 Kohlenstoffatomen, erhalten wird.

6. Cokondensat des Polyestertyps nach Anspruch 5, bei dem $Z^1$ die bifunktionelle Gruppe darstellt, die durch Entfernen der Hydroxygruppen aus Ethylenglykol erhalten wird.

7. Cokondensat des Polyestertyps nach Anspruch 5, bei dem $Z^1$ die bifuktionelle Gruppe darstellt, die durch Entfernen der Hydroxygruppen aus 1,4-Butandiol erhalten wird.

8. Cokondensat des Polyestertyps nach Anspruch 1, bei dem das Polycarbonat für die Cokondensation mit der Polyestervorstufe ein Viskositätsmittel-Molekulargewicht von 8000 bis 100 000 aufweist.

9. Cokondensat des Polyestertyps nach Anspruch 1, bei dem das Polycarbonat eine Einheit der Struktur der nachstehenden allgemeinen Formel

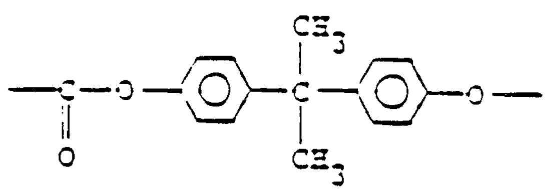

aufweist.

10. Cokondensat des Polyestertyps nach Anspruch 1, bei dem die Differenz der Schmelzpunkte zwischen dem Schmelzpunkt des Polyesters allein und dem Schmelzpunkt des Cokondensats, die auf die Polyestereinheit im Cokondensat zurückzuführen ist, die nachstehende Gleichung erfüllt:

$$\left(\begin{array}{l}\text{Schmelzpunkt (°K) von}\\ \text{Polyester allein (nicht}\\ \text{cokondensiert mit}\\ \text{Polycarbonat)}\end{array}\right) - \left(\begin{array}{l}\text{Schmelzpunkt (°K) des}\\ \text{Cokondensats bezogen}\\ \text{auf die Polyesterein-}\\ \text{heit im Cokondensat}\end{array}\right)$$

$$\leq 150 \times \frac{\text{Molzahl von Polycarbonat im Copolymer}}{\text{Molzahl von Polyester im Copolymer}}$$

**11.** Verfahren zur Herstellung des Cokondensats des Polyestertyps nach Anspruch 1, umfassend die Zugabe

(a) eines aromatischen Polycarbonats des Bisphenoltyps mit einem Viskositätsmittel-Molekulargewicht von mindestens 5000 zu

(b) einer Polyestervorstufe mit einem Zahlenmittel-Polymerisationsgrad von 1 bis 20, die erhalten wird aus Terephthalsäure oder einem Derivat davon mit Ester bildenden Eigenschaften und einer Diolkomponente und die ausgewählt wird aus der Gruppe, die aus $C_{2-15}$-aliphatischen Diolen, $C_{5-8}$-alicyclischen Diolen, Poly(alkylenoxid)-$\alpha$,$\omega$-diolen, einem statistischen- oder Blockcopolymer von Ethylenoxid mit 1,2-Propylenoxid und einem Gemisch davon besteht,

und die Durchführung einer Polycokondensation.

**12.** Polycarbonatharz-Zusammensetzung, umfassend

(i) ein aromatisches Polycarbonat des Bisphenoltyps im Gemisch mit

(ii) 5 bis 200 Gewichtsteilen eines Cokondensats des Polyestertyps nach einem der Ansprüche 1 bis 10 auf 100 Gew.-Teile des aromatischen Polycarbonats des Bisphenoltyps.

**13.** Zusammensetzung nach Anspruch 12, bei der das Cokondensat des Polyestertyps in das Polycarbonat in einer Menge von 10 bis 50 Gewichtsteilen auf 100 Gewichtsteile Polycarbonat eingebaut ist.

**14.** Polycarbonatharzzusammensetzung mit Schmelzindex, Schlagzugzähigkeit, Trübung und Lösungsmittel-Bruchfestigkeit (kritische Dehnung) wie nachstehend:
der Schmelzindex (280 °C, g/10 min) beträgt höchstens 8 g/10 min;
die Schlagzugzähigkeitkeit ($kg \cdot cm/cm^2$) beträgt mindestens 580 $kg \cdot cm/cm^2$;
die Trübung (%) beträgt höchstens 12 %; und
die Lösungsmittel-Bruchfestigkeit (kritische Dehnung; %) beträgt mindestens 0,25 %.